# EUROPÄISCHE PATENTANMELDUNG

(11) **EP 0 806 567 A2**
(43) Veröffentlichungstag der Anmeldung: **12.11.1997**
(21) Anmeldenummer: 97106991.9
(22) Anmeldetag: 28.04.1997
(51) Int. Cl.: F04B 11/00, B05B 9/03

(54) **Vorrichtung zur Verarbeitung von viskosen Mehrkomponenten-Elastomeren**

(30) Priorität: 06.05.1996 DE 19618128
(71) Anmelder: DBS Beschichtung und Systeme Technik GmbH, 48739 Legden (DE)
(72) Erfinder: Küppers, Peter, 46459 Rees (DE)
(74) Vertreter: Laufhütte, Dieter, Dr.-Ing.

(57) **Zusammenfassung**

Vorrichtung zur Verarbeitung von viskosen Mehrkomponenten-Elastomeren, wobei für jede Komponente jeweils eine Pump- und Dosiervorrichtung (1, 2) vorgesehen ist, welche jeweils eine der zu verarbeitenden Komponenten über eine separate Leitung (12, 22) fördert und über eine weitere separate Leitung (13, 14) einer Mischvorrichtung zuführt, welche mit einer Sprüh-Applikationsvorrichtung (4, 6) verbunden ist, wobei jede Pump- und Dosiervorrichtung (1, 2) jeweils eine Axialkolbenpumpe aufweist, welche an ihrer Auslaßseite mit Mitteln zur Kompensation von bei der Hubbewegung der Kolben der Axialkolbenpumpe auftretenden Druckpulsen ausgebildet ist.

## Beschreibung

Die vorliegende Erfindung betrifft eine Vorrichtung zur Verarbeitung von viskosen Mehrkomponenten-Elastomeren nach dem Oberbegriff des Patentanspruchs 1.

Es sind Systeme zur Verarbeitung von Mehrkomponenten-Elastomeren bekannt, bei denen die einzelnen Komponenten aus Lagereinrichtungen über Leitungen zu einer Dosierpumpe gefördert werden, wobei die Dosierpumpe die jeweiligen Komponenten in der gewünschten Menge bzw. im gewünschten Mengenverhältnis zu einer Mischvorrichtung weiterfördert, von wo aus der nun vermischte und applikationsfertige Elastomerstoff einer Applikationsvorrichtung, beispielsweise einer Spritzpistole, zugeführt wird.

Bestimmte Zweikomponenten-Elastomersysteme weisen eine derart kurze Verarbeitungszeit nach der Mischung auf, daß die Vermischung der beiden Komponenten in der Spritzpistole unmittelbar vor dem Verspritzen erfolgt.

Bestimmte zu verarbeitende Komponenten, beispielsweise bei der Herstellung von PU-Elastomeren verwendete Polyolkomponenten und Isozyanatkomponenten, weisen eine hohe Viskosität auf. Es sind daher bei vielen Systemen vor und/oder hinter der Dosierpumpe Heizeinrichtungen vorgesehen, welche die zu fördernden Komponenten beispielsweise auf etwa 50° C erwärmen, um so ihre Förderfähigkeit und Verspritzfähigkeit zu erhöhen. Es ist beispielsweise bekannt, die Förderrohre des Systems als Heizrohre auszubilden.

Als Pump- und Fördereinrichtungen finden Axialkolbenpumpen breite Verwendung. Hierbei werden auf einem Lochkreis eines Zylinderblocks angeordnete Kolben beispielsweise über einen Schrägscheiben- oder Taumelscheibenantrieb oszillierend angetrieben, so daß bei Aufwärtsbewegung eines Kolbens ein Flüssigkeitsmedium von einem Saugeinlaß angesogen, und bei Abwärtsbewegung an einen Pumpenauslaß (Druckauslaß) abgegeben wird.

Die Förderleistung einer solchen Axialkolbenpumpe ist über die Winkelstellung der Schräg- bzw. Taumelscheibe relativ zu ihrer Antriebsachse stufenlos einstellbar.

Nachteilig bei derartigen Axialkolbenpumpen ist jedoch, daß es beim Durchlaufen eines Kolbens durch seinen unteren Totpunkt (Übergang von Saug- zu Druckhub) sowie bei Durchlaufen des oberen Totpunktes (Übergang von Druck- zu Saughub) zu pulsartigen Belastungen der Auslaßseite der Axialkolbenpumpe kommt. Es entstehen dadurch pulsartige Schwankungen in der Menge der jeweils geförderten Stoffe.

Axialkolbenpumpen waren daher bislang für einen exakten Dosierbetrieb nicht verwendbar.

Ferner ist nachteilig, daß herkömmliche Axialkolbenpumpen keine ausreichenden Dichtungen aufweisen, so daß zu verarbeitendes bzw. zu förderndes Medium über die Seitenwände der eine Hubbewegung ausführenden Kolben in die Triebscheibenkammer (Schrägscheiben- bzw. Taumelscheibenkammer) gelangen kann. Insbesondere bei der Förderung von abrasiven Medien kann dies zu einer Beeinträchtigung der Schmierung zwischen der Triebscheibe und der von dieser angetriebenen Kolben führen.

Aufgabe der vorliegenden Erfindung ist daher, eine Vorrichtung zur Verarbeitung von Mehrkomponenten-Elastomeren derart weiterzubilden, daß eine genaue und gleichmäßige Dosierung der einzelnen Komponenten möglich ist.

Diese Aufgabe wird gelöst durch eine gattungsgemäße Vorrichtung, die entsprechend den Merkmalen des kennzeichnenden Teils des Patentanspruchs 1 weitergebildet ist.

Mit der erfindungsgemäßen Vorrichtung ist nun eine genaue und gleichmäßige Dosierung der durch die jeweiligen Axialkolbenpumpen geförderten Komponenten bzw. Medien erzielbar.

Axialkolbenpumpen sind nun erstmals in Bereichen verwendbar, in denen eine sehr genaue Dosierung notwendig ist, und in denen bislang wesentlich aufwendigere Dosiersysteme verwendet werden mußten.

Gemäß einer vorteilhaften Weiterbildung der Erfindung sind in den jeweiligen Zylindern der Axialkolbenpumpen am Austrittsende der Kolben Dichtlippenringe derart angeordnet, daß an einem Kolben anhaftendes Medium bei der Saughubbewegung des Kolbens von diesem abgestreift wird. Hiermit ist es möglich, abrasive Medien ohne Beträchtigung der Funktionsfähigkeit der Axialkolbenpumpe zu fördern, da hierdurch weitgehend verhindert wird, daS zu förderndes Material in den Bereich der Triebscheibe kommt.

Gemäß einer weiteren vorteilhaften Ausgestaltung ist in der Triebscheibenkammer ein Mittel vorgesehen, das sowohl als Schmiermittel zwischen der Triebscheibe und den von dieser angetriebenen Kolben, als auch als Trennmittel zum Abspülen von über den Kolben in die Triebscheibenkammer gelangtem, zu förderndem Medium dient.

Weitere Einzelheiten und Vorteile der Erfindung werden anhand eines zeichnerisch dargestellten Ausführungsbeispiels erläutert. Es zeigen:
- Fig. 1: eine schematische Darstellung einer erfindungsgemäßen Vorrichtung zur Verarbeitung von Mehrkomponenten-Materialien und
- Fig. 2: eine bei einer erfindungsgemäßen Vorrichtung verwendete Axialkolbenpumpe im Längsschnitt.

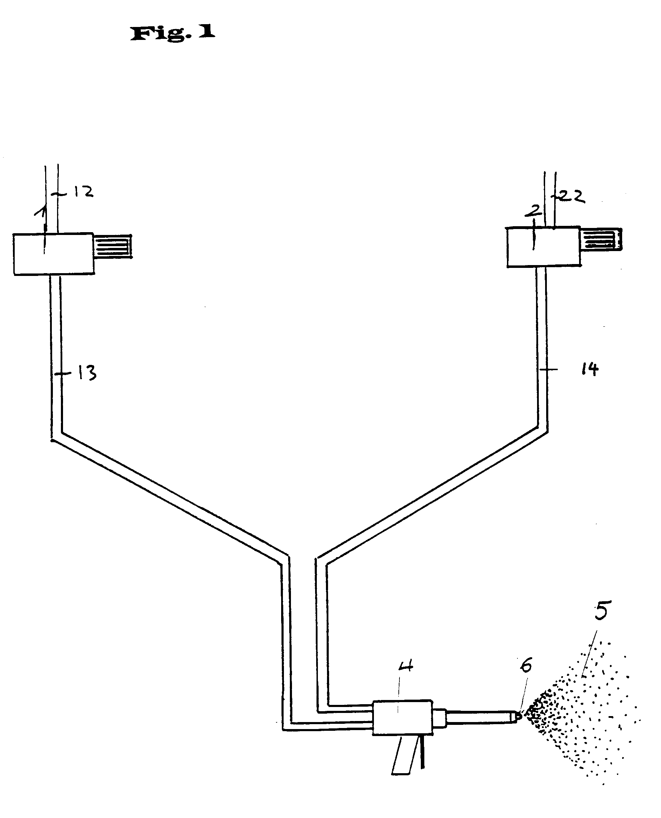

Fig. 1 zeigt schematisch die erfindungsgemäße Vorrichtung zur Verarbeitung von Mehrkomponenten-Materialien am Beispiel eines Zweikomponentensystems.

Eine erste Komponente wird über Leitungen 12 einer Pump- und Dosiervorrichtung 1 zugeführt. Je nach seiner Viskosität ist das zu fördernde Medium vor seinem Eintritt in die Pump- und Dosiervorrichtung 1 auf eine bestimmte Temperatur erwärmt, bei der eine wirksame und problemlose Förderung und/oder Dosierung möglich ist.

Über eine Leitung 13 wird das von der Pump- und Dosiervorrichtung 1 geförderte Medium einem ersten Eingang einer Zweikomponenten-Spritzpistole 4 zugeführt, welche eine Mischvorrichtung, z. B. einen statischen Rohrmischer oder einen Rotorenzwangsmischer, aufweist.

Eine zweite Komponente wird entsprechend über eine Leitung 22, eine Pump- und Dosiervorrichtung 2 und eine Leitung 14 einem zweiten Eingang der Zweikomponenten-Spritzpistole 4 zugeführt.

Leitungen 13 und 14 sind als Heizschläuche ausgebildet.

In der Spritzpistole 4 werden die Komponenten, beispielsweise eine Polyolkomponente und eine Isocyanatkomponente eines Zweikomponenten-Flüssigkeitselastomers zusammengeführt und applikationsfertig vermischt. Hierbei beträgt der Druck vorzugsweise 30 bis 50 bar. Die vermischten Komponenten werden, vorzugsweise ohne Luftunterstützung, durch einen Düsenkern 6 geführt und verspritzt. Hierbei ist vorteilhaft, daß wegen des niedrigen Spritzdruckes die verspritzten Partikel 5 des Zweikomponenten-Mediums während des Verspritzens keine Luft aufnehmen.

Die Pump- und Dosiervorrichtungen 1 bzw. 2 weisen jeweils wenigstens eine Axialkolbenpumpe auf.

Eine derartige Axialkolbenpumpe ist im Schnitt dargestellt.

Die Triebwelle 30 ist mit der Triebscheibe 8, im dargestellten Beispiel eine Taumelscheibe, fest verbunden. Angetrieben von der um die Achse der Triebwelle 30 rotierenden Triebscheibe 8 vollführen alle im Zylinderblock 40 gelagerten Kolben gegen die Kraft von in den jeweiligen Kolben vorgesehenen Federn 17 Hubbewegungen.

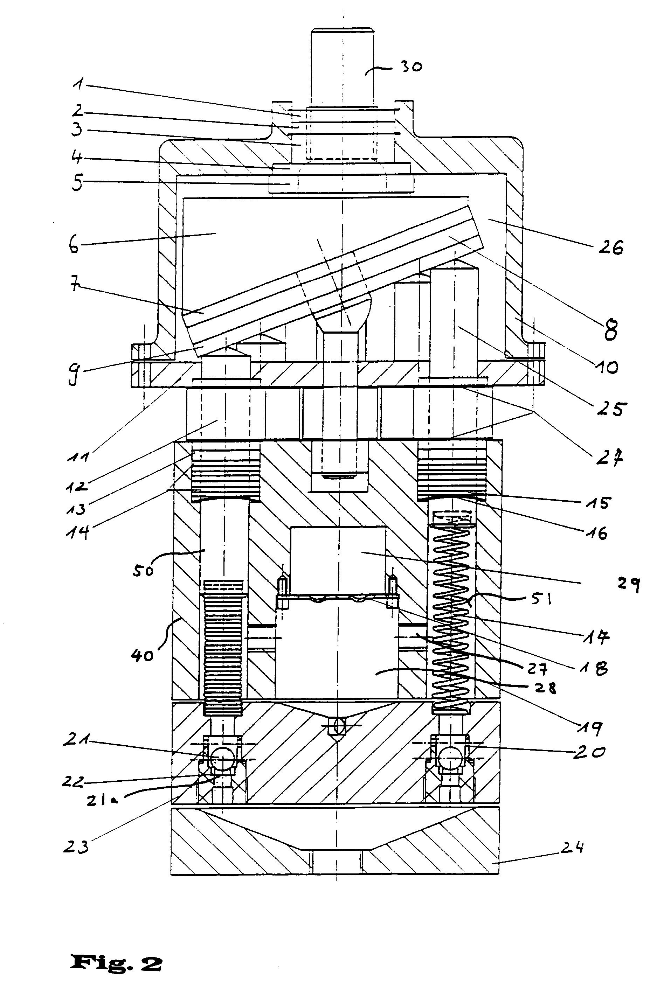

Die in Fig. 1 dargestellte Zuführleitung bzw. Ansaugleitung 12 ist mit Saugventil 22 (Fig. 2) verbunden. Der in Fig. 2 linke Kolben 25 befindet sich in seinem oberen Totpunkt, was dazu führt, daß das dem zu fördernden Medium zur Verfügung stehende Zylindervolumen minimal ist. Bei einer weiteren Drehung der Triebscheibe wird im linken Zylinderraum 50 durch den durch die Volumenvergrößerung entstehenden Unterdruck über das Saugventil 22 zu fördernde Flüssigkeit angesaugt. Der Kolben 25 bewegt sich nun zu seinem unteren Totpunkt, was dazu führt, daß das der zu fördernden Flüssigkeit zur Verfügung stehende Zylindervolumen maximal ist. Dieser Zustand ist für den in Fig. 2 rechten Zylinder 51 dargestellt.

Bewegt sich der Kolben nun von seinem unteren Totpunkt wieder fort, verkleinert sich das der Flüssigkeit zur Verfügung stehende Volumen und es entsteht ein Überdruck. Hierdurch sperrt das Saugventil 22. Über ein Druckventil (nicht dargestellt) wird die zu fördernde Flüssigkeit über einen Auslaß 27 und eine Druckkammer 28 zur in Fig. 1 dargestellten Leitung 13 bzw. 14 gefördert.

Durchlaufen die Kolben 25 ihre unteren bzw. oberen Totpunkte, entstehen am Saugventil 22 zwischen Saugventilkugel 21 und Ventilsitz 21a Ventiltotpunkte. Hierdurch entstehen im Pumpenauslaß 27, 28 plötzliche Druckpulse, welche zu einer ungleichmäßigen Förderleistung der Pumpe führen- Um dies zu vermeiden, ist oberhalb der Druckkammer 27 eine Pulsationskammer 29 vorgesehen, wobei zwischen Pulsationskammer 29 und Druckkammer 27 eine Gegendruckmembran 18 angeordnet ist. Die Gegendruckmembran 18 wird durch ein flüssiges oder ein gasförmiges Medium in der Pulsationskammer 28 gestützt. Die Druckbeaufschlagung des in der Pulsationskammer 28 befindlichen Mediums kann individuell dem zu fördernden Stoff angepaßt werden.

Plötzlich auftretende Druckpulse können von der Gegendruckmembran aufgenommen werden, so daß eine gleichmäßige Förderleistung der Axialkolbenpumpe insgesamt gewährleistet ist.

Eine Überwachung der Förderleistung kann mittels eines (nicht dargestellten) Volumenstromzählers erfolgen, welcher beispielsweise mit Leitungen 13 bzw. 14 verbunden sein kann.

Die verwendeten Volumenstromzähler leiten ihre Meßwerte, beispielsweise Volumenstromtakte, an eine Rechnereinheit weiter. Die Rechnereinheit ist mit einer Steuereinheit zur Steuerung des Pumpenantriebs verbunden.

Vom Volumenstromzähler gelangen die Medien dann in die jeweiligen Verbindungsleitungen 13 bzw. 14, welche als Heizschläuche ausgebildet sein können. Hierdurch können die Komponenten auf ihre jeweilige Verarbeitungs- bzw. Mischtemperatur gebracht werden. Der Förderweg, d. h. die Länge der Leitungen 13 bzw. 14 bis zu einer Spritzpistole 4, kann bis zu 100 m betragen.

In Fig. 2 ist dargestellt, daß an den Oberseiten der Zylinder 50, 51 Dichtlippenringe 14 vorgesehen sind. Diese Dichtlippenringe 14 sind vorzugsweise V- bzw. keilförmig ineinandergesteckt, und werden von einem Stützring 12 und einem Spreizring 15 in ihrer Position gehalten. Vorteilhafterweise sind die V- bzw. keilförmigen Dichtringe mit ihren Spitzen zur druckabgewandten Seite hin, d. h. in Fig. 2 nach oben, angeordnet. Über eine Tellerfeder 16 können die Dichtlippenringe 14 nachgespannt werden. Bei der Aufwärtsbewegung der Kolben 25 wird an diesen anheftendes Medium durch die Dichtlippenringe abgestreift. Hierdurch wird weitgehend vermieden, daß zu fördernde Medien in die Triebscheibenkammer 26 gelangen, wo sie zu Beschädigungen, beispielsweise durch Abrieb, führen könnten.

In der Triebscheibenkammer werden je nach Drehzahl der Triebscheibe verschiedene Schmiermittel verwendet.

Bei geringen Drehzahlen, beispielsweise zwischen fünf und 50 Umdrehungen/Minute, sind spezielle Schmierstoffe verwendbar, welche desweiteren dazu dienen, von den Förderzylindern über die Kolben 25 in die Triebmittelkammer gelangte Fördermedien bzw. Elastomerkomponenten von den Kolben abzuspülen.

Besonders bevorzugt ist in diesem Zusammenhang die Verwendung von Alkansulfonaten bzw. Alkansulfonsäureester (ASE).

Dieses Schmier- bzw. Trennmittel wird über Flachdichtungen 27 und Simmerringe 1, 2 gegen Entweichen abgedichtet.

Durch eine Kombination der Dichtlippenringanordnung und dem Vorsehen eines solchen Trennmittels in der Triebscheibenkammer kann die Axialkolbenpumpe in wirksamer Weise gegen Verschleiß geschützt werden. Dies ist insbesondere dann von Bedeutung, wenn abrasive oder pigmentierte Medien von der Axialkolbenpumpe gefördert werden sollen.

In der in Fig. 2 dargestellten Ausführungsform ist der Zylinderkopf über Stützlager 12 mit dem Triebscheibengehäuse 10 verbunden. Hierdurch ist es in besonders einfacher Weise möglich, eines dieser beiden Bauteile auszutauschen. Hierdurch können Kosten gespart werden.

## Patentansprüche

1. Vorrichtung zur Verarbeitung von viskosen Mehrkomponenten-Elastomeren, wobei für jede Komponente jeweils eine Pump- und Dosiervorrichtung (1, 2) vorgesehen ist, welche jeweils eine der zu verarbeitenden Komponenten über eine separate Leitung (12, 22) fördert und über eine weitere separate Leitung (13, 14) einer Mischvorrichtung zuführt, welche mit einer Sprüh-Applikationsvorrichtung (4, 6) verbunden ist,
**dadurch gekennzeichnet**,
daß jede Pump- und Dosiervorrichtung (1, 2) jeweils eine Axialkolbenpumpe aufweist, welche an ihrer Auslaßseite (27, 28) mit Mitteln (18, 29) zur Kompensation von bei der Hubbewegung der Kolben (25) der Axialkolbenpumpe auftretenden Druckpulsen ausgebildet ist.

2. Vorrichtung nach Anspruch 1, dadurch gekennzeichnet, daß die Mittel zur Kompensation der Hubbewegung eine druckbeaufschlagte Pulsationskammer (29) aufweisen, welche durch eine flexible Membran (18) von einer Druckkammer (28) der Auslaßseite der Axialkolbenpumpe getrennt ist.

3. Vorrichtung nach Anspruch 1 oder 2, dadurch gekennzeichnet, daß die Axialkolbenpumpe eine Taumelscheibenpumpe ist.

4. Vorrichtung nach Anspruch 1 oder 2, dadurch gekennzeichnet, daß die Axialkolbenpumpe eine Schrägscheibenpumpe ist.

5. Vorrichtung nach einem der vorstehenden Ansprüche, dadurch gekennzeichnet, daß in den Zylindern (50, 51) der Axialkolbenpumpe Dichtlippenringe (14) derart angeordnet sind, daß bei einer Hubbewegung der Kolben (25) aus den Zylindern heraus an den Kolben anhaftendes, zu förderndes Medium von den Dichtlippen (14) erfaßt und in den Zylindern (50, 51) zurückgehalten wird.

6. Vorrichtung nach Anspruch 5, dadurch gekennzeichnet, daß die Dichtlippenringe jeweils V- bzw. keilförmig ausgebildet und ineinanderschiebbar sind, wobei die V- bzw. Keilspitzen der jeweiligen Dichtlippenringe (14) bezüglich der Zylinder (50, 51) zur Augangsseite der Kolben (25) hin gerichtet sind.

7. Vorrichtung nach einem der vorstehenden Ansprüche, dadurch gekennzeichnet, daß als Schmiermittel zwischen einer Triebscheibe (8) der Axialkolbenpumpe und den von dieser Triebscheibe angetriebenen Kolben (25) ein Mittel verwendet wird, durch welches an den Kolben (25) anhaftendes, zu verarbeitendes Medium von diesen trennbar ist.
